# EUROPÄISCHE PATENTANMELDUNG

(11) **EP 0 919 581 A2**
(43) Veröffentlichungstag der Anmeldung: **02.06.1999**
(21) Anmeldenummer: 98120892.9
(22) Anmeldetag: 04.11.1998
(51) Int. Cl.: C08G 18/62, C08G 18/72, C09D 175/04

(54) **2K-PUR-Beschichtungszusammensetzung**

(30) Priorität: 28.11.1997 DE 19752691
(71) Anmelder: HÜLS AKTIENGESELLSCHAFT, 45764 Marl (DE)
(72) Erfinder: Lomölder, Rainer Dr., 48153 Münster (DE); Plogmann, Friedrich, 44581 Castrop-Rauxel (DE); Kohlstruk, Stephan Dr., 45657 Recklinghausen (DE)

(57) **Zusammenfassung**

2K-PUR-Beschichtungszusammensetzung im wesentlichen enthaltend:
A) eine Polyolkomponente,
B) eine Polyisocyanatkomponente,
   dadurch gekennzeichnet,
   daß die Polyisocyanatkomponente B) mindestens 30 Gew.-% eines Polyisocyanats auf Basis von 2-Methylpentandiisocyanat-1,5 und ein Polyisocyanat auf Basis von Isophorondiisocyanat enhält, wobei die Summe beider Polyisocyanate 100 Gew.-% ergibt.

## Beschreibung

Die vorliegende Erfindung betrifft Zweikomponenten-Polyurethanbeschichtungszusammensetzungen mit hoher Beständigkeit gegen Umwelteinflüsse und gegen mechanische Beanspruchungen.

Zweikomponenten-Polyurethanbeschichtungen (2K-PUR) auf Basis aliphatischer und cycloaliphatischer Polyisocyanate sind bekannt für ihre hohe Witterungs,-Vergilbungs- und Chemikalienbeständigkeit. Daher finden sie auch im Bereich der Automobilerstlackierung als Deck- bzw. Klarlacke Anwendung (W. Wieczorrek in: Stoye/Freitag, Lackharze, S. 215 ff, C. Hanser Verlag, 1996). Sie zeichnen sich insbesondere durch eine hohe Beständigkeit gegen Umwelteinflüsse (saurer Regen, Vogelkot) gegenüber klassischen Decklacken aus (R. Ryntz, Paint & Coatings industy, March 1997, S. 36). Die Beständigkeit gegen Umwelteinflüsse von 2K-PUR-Beschichtungen auf Basis von Polyisocyanaten des Hexamethylendiisocyanates (HDI) wurde durch Verwendung eines Gemisches von Polyisocyanaten des HDI und des Isophorondiisocyanates (IPDI) signifikant verbessert (WO 93/05090). Höhere Anteile von IPDI-Polyisocyanat im Polyisocyanatgemisch führt aufgrund der Erhöhung der Glasübergangstemperatur zu einer weiteren Verbesserung der Beständigkeit gegen Umwelteinflüsse, aber auch zu einer Beeinträchtigung der Beständigkeit gegen mechanische Beanspruchungen wie z. B. in der Kratz- oder Waschstraßenbeständigkeit (Industrie Lackierbetrieb, 61, 30 (1993). Vor dem Hintergrund ständig steigender Qualitätsanforderungen an die Automobilerstlackierung wird eine weitere Verbesserung der erforderlichen Eigenschaften angestrebt.

Aufgabe der vorliegenden Erfindung war es, eine 2K-PUR-Beschichtungszusammensetzung mit verbesserter Beständigkeit gegen Umwelteinflüsse zu finden, ohne Beeinträchtigung der mechanischen Beständigkeiten, insbesondere der Kratz- oder Waschstraßenbeständigkeit.

Diese Aufgabe wurde durch die erfindungsgemäßen 2K-PUR-Beschichtungszusammensetzungen gelöst.

Gegenstand der Erfindung sind 2K-PUR-Beschichtungszusammensetzungen im wesentlichen enthaltend:
A) eine Polyolkomponente,
B) eine Polyisocyanatkomponente,
   dadurch gekennzeichnet, daß die Polyisocyanatkomponente B) mindestens
   30 Gew.-% eines Polyisocyanats auf Basis von 2-Methylpentandiisocyanat-1,5 und ein Polyisocyanat auf Basis von Isophorondiisocyanat enhält, wobei die Summe beider Polyisocyanate 100 Gew.-% ergibt.

Polyisocyanate auf Basis von MPDI sind bekannt (DE 31 51 855, DE 31 51 853, DE 32 27 779). In DE 31 51 854 ist eine gegenüber anderen Polyisocyanaten verbesserte Thermostabilität bei 240 °C von Polyurethanbeschichtungen auf Basis von MPDI-Isocyanurat beschrieben. Ein Vergleich in der Chemikalienbeständigkeit von PUR-Beschichtungen auf Basis von MPDI- bzw. HDI-Isocyanurat ergab keine Hinweise auf ein unterschiedliches Beständigkeitsniveau.

Die Lösung der Aufgabe war insofern überrraschend, da eine deutliche Eigenschaftsverbesserung bezüglich der Beständigkeiten gegen Umwelteinflüsse und guter Beständigkeit gegen mechanische Beanspruchungen gegenüber entsprechenden 2K-PUR-Systemen auf Basis von HDI-Polyisocyanaten nicht zu erwarten war, da die zur Herstellung der Polyisocyanate verwendeten Diisocyanate HDI bzw. MPDI strukturell sehr ähnlich sind (DE 31 51 854).

Die Polyisocyanatkomponente B) enthält mindestens 30 Gew.-% eines Polyisocyanates auf Basis von 2-Methylpentandiisocyanat-1,5 und ein Polyisocyanat auf Basis von Isophorondiisocyanat.
Als Polyisocyanate auf Basis von MPDI können biuret-, uretdion- und/oder isocyanuratgruppenhaltige Polyisocyanate (DE 31 51 855, DE 31 51 853, DE 32 27 779), auch in allophanatmodifizierter Form, wie prinzipiell in EP 535 483 beschrieben, eingesetzt werden. Die mittlere Funktionalität sollte 2,3 - 5 betragen. In einer bevorzugten Ausführungsform werden mittels destillativer Abtrennung Polyisocyanate mit einem Restmonomergehalt < 0,5 Gew.-% verwendet. Besonders bevorzugt sind isocyanuratgruppenhaltige Polyisocyanate.

Als Polyisocyanate auf Basis von IPDI werden isocyanuratgruppenhaltige Polyisocyanate (US-P 4.454.317), auch in allophanatmodifizierter Form, wie prinzipiell in EP 535 483 beschrieben, bevorzugt eingesetzt.

Die mittlere Funktionalität der IPDI-Polyisocyanate sollte 2,3 - 4 betragen. In einer bevorzugten Ausführungsform werden mittels destillativer Abtrennung Polyisocyanate mit einem Restmonomergehalt < 0,5 Gew.% verwendet. Besonders bevorzugt werden isocyanuratgruppenhaltige Polyisocyanate eingesetzt.

Neben einer physikalischen Mischung von isocyanurat-basierenden Polyisocyanaten der reinen Diisocyanate können in einer weiteren Ausführungsform isocyanuratbasierende Polyisocyanate, erhalten durch katalytische Trimerisierung von Diisocyanatgemischen von MPDI und IPDI, wie grundsätzlich in DE 30 33 860 beschrieben, eingesetzt werden.

Als Polyolkomponente A) sind hydroxylgruppenhaltige (Meth)acryl-Copolymerisate, auch in Kombination mit hydrorylgruppenhaltigen, gesättigten Polyesterharzen und/oder urethan- und estergruppenhaltige Polyolen geeignet.

Als hydroxylgruppenhaltige (Meth)acryl-Copolymerisate können Harze einer Monomerzusammensetzung, wie sie z.B. in WO 93/15849 oder auch in DE 195 29 124 beschrieben ist, verwendet werden. Dabei sollte die durch anteilige Verwendung von (Meth)acrylsäure als Monomer einzustellende Säurezahl des (Meth)acryl-Copolymerisates 0-15, vorzugsweise 3-10 betragen. Das zahlenmittlere Molgewicht (ermittelt durch Gelpermeationchromatographie gegen einen Polystyrolstandard) des (Meth)acryl-Copolymerisates beträgt vorzugsweise 2000-20000, die Glasübergangstemperatur beträgt vorzugsweise -10 bis + 60 °C. Der durch anteilige Verwendung von hydroryalkyl(meth)acrylaten einzustellende Hydroxylgehalt der erfindungsgemäß zu verwendenden (Meth)acryl-Copolymerisate beträgt vorzugsweise70-250 mg KOH/g, besonders bevorzugt 90-190 mg KOH/g.

Als erfindungsgemäß geeignete Polyesterpolyole kommen Harze mit einer Monomerzusammensetzung aus Di-und Polycarbonsäuren und Di-und Polyolen wie sie z. B. in Stoye/Feitag, Lackharze, C. Hanser Verlag, 1996, S. 49 oder auch in WO 93/15849 beschrieben sind, in Betracht. Als Polyesterpolyole werden auch Polyadditionsprodukte von Caprolacton an niedermolekulare Di- und Triole, wie z. B. unter der Bezeichnung TONE (Union Carbide Corp.) oder CAPA (Solvay / Interox) erhältlich, eingesetzt. Das rechnerisch bestimmte mittlere Molekulargewicht beträgt vorzugsweise 500-5000, besonders bevorzugt 800-3000, die mittlere Funktionalität 2,0-4,0, bevorzugt 2,0-3,5.

Als erfindungsgemäß zu verwendende urethan- und estergruppenhaltige Polyole kommen prinzipiell solche in Betracht, wie sie in EP-140 186 beschrieben sind. Bevorzugt werden urethan- und estergruppenhaltige Polyole, zu deren Herstellung Trimethylhexamethylendiisocyanat (TMDI), IPDI oder MPDI verwendet werden. Das Molgewicht beträgt vorzugsweise 500-2000, die mittlere Funktionalität 2,0 - 3,5.

Die erfindungsgemäße 2K-PUR-Beschichtungszusammensetzung enthält in der Regel in der Lacktechnologie bekannte Lösemittel und Hilfsstoffe wie Stabilisatoren, Lichtschutzmittel, Katalysatoren, Verlaufsmittel oder Rheologiehilfsmittel, wie z.B sog 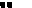 sag control agents", Mikrogele oder pyrogenes Siliciumdioxid in typischen Konzentrationen.
Als Katalysatoren kommen insbesondere solche in Betracht, die sich auf dem Gebiet der 2K-PUR-Technologie bewährt haben, wie z. B. organische Sn(IV)-, Sn(II)-, Bi-Verbindungen oder auch tert. Amine.
Die Hilfsstoffe werden üblicherweise in die Komponente A) eingearbeitet.

Falls erforderlich, können in die Komponente A) auch in der Lacktechnologie übliche anorganischen oder organischen Farbpigmente eingearbeitet werden.

Als Lösemittel zur Verdünnung der erfindungsgemäßen Beschichtungszusammensetzung werden bevorzugt aromatische und/oder estergruppenhaltige, nicht-protische Lösemittel verwendet.

Vor der Verarbeitung werden die Komponenten A) und B) innig vermischt. Das Mischungsverhältnis beider Komponenten ergibt sich aus dem Hydroxylgehalt der Komponente A) und dem Isocyanatgehalt der Komponente B) unter Berücksichtigung der erwünschten Söchiometrie, ausgedrückt als Verhältnis OH:NCO. Erfindungsgemäß beträgt das bevorzugte Verhältnis OH:NCO 1:0,8 bis 1: 1,5, besonders bevorzugt 1:0,9 bis 1:1,3.

Die erfindungsgemäße Beschichtungszusammensetzung kann nach bekannten Verfahren wie Spritzen, Tauchen, Walzen oder Rakeln aufgetragen werden. Dabei kann das zu beschichtende Substrat bereits mit weiteren Lackschichten versehen sein. Besonders geeignet ist die erfindungsgemäße Beschichtungszusammensetzung als Klarlack, wobei diese im sogenannten Naß-in-Naß-Verfahren auf eine Basislackschicht aufgetragen wird, und anschließend beide Lackschichten gemeinsam gehärtet werden.

Die Aushärtung der erfindungsgemäßen Beschichtungszusammensetzung kann durch Temperaturerhöhung beschleunigt werden. Sie erfolgt bevorzugt im Bereich von 20 °C bis 200 °C.

### Die Erfindung wird durch die folgenden Beispiele näher erläutert:

### Beispiel 1:

Ein isocyanurat-basierendes Polyisocyanat auf Basis von MPDI wurde gemäß DE 31 51 855 durch katalytische Trimerisierung von MPDI und anschließender Restmonomerabtrennung durch Dünnschichtdestillation erhalten. Das hochviskose Produkt wurde 90 Gew.%-ig in Butylacetat gelöst. Die Lösung war charakterisiert durch folgende Kenndaten:
Viskosität (23°C): 3500 mPas; NCO-Gehalt: 19,4 %; monomeres MPDI: 0,3 Gew.%.

### Beispiele 2 - 3 und Vergleichsbeispiele 4 - 5

Die Vergleichsbeispiele 4 (zu Beispiel 2) und 5 (zu Beispiel 3) dokumentieren den Stand der Technik unter Verwendung von Polyisocyanatgemischen von HDI-Polyisocyanat (aliphatisch) und IPDI-Polyisocyanat (cycloaliphatisch). Die Beispiele 2 und 3 enthalten erfindungsgemäße Beschichtungszusammensetzungen unter Verwendung der erfindungsgemäßen Polyisocyanatgemische von MPDI-Polyisocyanat (aliphatisch, Beispiel 1) und IPDI-Polyisocyanat (cycloaliphatisch).

Zur Formulierung der 2K-PUR-Beschichtungszusammensetzungen wurde als hydroxylgruppenhaltiges (Meth)acrylcopolymerisat MACRYNAL SM 510 N (Hoechst-Vianova Resins) verwendet. Kenndaten des Harzes: OH-Gehalt 150 mg KOH/g; Tg: +30 °C.
Klare 2K-PUR-Beschichtungszusammensetzungen (Klarlack) werden gemäß den in den Tabelle1 angegebenen Mengenteilen formuliert, die Stöchiometrie OH:NCO betrug in allen Fällen 1:1. Die Viskosität der Klarlacke betrug, bestimmt als Auslaufzeit im DIN-4-Becher bei 20 °C, ca. 20 Sekunden. Zur Prüfung der Beständigkeit gegen Umwelteinflüsse und gegen mechanische Beanspruchung wurden die Klarlacke in einem Naß-in-Naß-Verfahren auf einen metallic-Basislack der Fa. Herberts (STANDOX VWL 97A Diamantsilber), der nach Spritzauftrag 5-10 min bei Umgebungstemperatur abgelüftet wurde, ebenfalls per Sprirzauftrag appliziert. Die Aushärtung erfolgte nach 5 min Ablüftzeit bei Raumtemperatur und 30 min 130°C. Die Trockenfilmschichtdicke der Klarlacke betrug jeweils ca. 30 µm, die des Gesamtaufbaus ca. 45 µm.
Zur Ermittlung der allgemeinen mechanischen Kenndaten der gehärteten 2K-PUR-Beschichtungen wurden Klarlacke mit einer Trockenfilmschichtstärke von ca. 35 µm auf phosphatiertes Stahlblech (Bonder 26) appliziert und 30 min bei 130 °C gehärtet.

**Tabelle 1**

| Gew.-Teile (%) der Formulierungsbesstandteile der Klarlacke | | | | |
|---|---|---|---|---|
| | Beispiel 2 | Beispiel 3 | Beispiel 4 (Vergleich) | Beispiel 5 (Vergleich) |
| Gew.-Verhältnis der aliphatischen/cycloaliphatischen Polyisocyanate (Festharze) | 7/3 | 1/1 | 7/3 | 1/1 |
| MPDI-Polyisocyanat (Beispiel 1) | 12,0 | 9,0 | | |
| HDI-Polyisocyanat (isocyanurat-basierendes aliphat. Polyisocyanat) (DESMODUR N 3390, Bayer AG (90%ig)) | | | 11,8 | 9,2 |
| IPDI-Polyisocyanat (isocyanurat-basierend, cycloaliphatisches Polyisocyanat) (VESTANAT T 1890 L, Hüls AG (70 %ig)) | 6,6 | 11,5 | 6,6 | 11,8 |
| MACRYNAL SM 510 N (Hoechst-Vianova Resins) | 46,5 | 46,4 | 46,3 | 47,3 |
| Ca-Octoat (4% Ca) (Borchers) | 0,8 | 0,8 | 0,8 | 0,8 |
| DBTL (1%-ig in Butylacetat) | 0,43 | 0,66 | 0,43 | 0,65 |
| TINUVIN 292 (CIBA-GEIGY), 8%-ig in Xylol | 2,8 | 2,8 | 2,7 | 2,8 |
| TINUVIN 900 (CIBA-GEIGY), 8%-ig in Xylol | 2,8 | 2,8 | 2,7 | 2,8 |
| DBE (Dibasic Ester) (Du Pont) | 4,6 | 2,6 | 4,5 | 2,6 |
| Fluorad FC 430 (3M), 10%-ig in Butylacetat | 2,0 | 2,0 | 2,0 | 1,9 |
| Butylacetat | 10,8 | 10,8 | 11,1 | 10,1 |
| Xylol | 10,7 | 10,7 | 11,1 | 10,1 |

**Tabelle 2**

| Mechanische Kenndaten der gehärteten Klarlackfilme | | | | |
|---|---|---|---|---|
| | Beispiel 2 | Beispiel 3 | Beispiel 4 (Vergleich) | Beispiel 5 (Vergleich) |
| Trockenfilmschichtstärke [µm] | 35 | 30 | 33 | 40 |
| Eindruckhärten n. Buchholz (DIN 53153) | 125 | 143 | 111 | 111 |
| Pendelhärte (König) [s] (DIN 53157) | 192 | 197 | 194 | 201 |
| Erichsen-Tiefung [mm] (DIN 53156) | 5,5 | 4,0 | 7,0 | 6,5 |
| Superbenzin-Benständigkeit* | 1 | 1 | 1 | 1 |
| Kugelschlag-Test (Gardner) direkt [in lbs] | 60 | 40 | >80 | 30 |

| | | | | |
|---|---|---|---|---|
| * 30 sec. Einwirkzeit von Superbenzin auf den gehärteten Lackfilm, anschließend visuelle Beurteilung der Beständigkeit: 1: sehr gut, 2: gut, 3: durchschnittlich, 4: schlecht, 5: sehr schlecht | | | | |

Die Beständigkeiten der gehärteten Klarlacke gegen Umwelteinfllüsse wurden durch chem. Reagenzien (20 %-ige Schwefelsäure (Beständigkeit gegen sauren Regen)) sowie eine 50 %-ige Dispersion von Pancreatin (Vogelkotbeständigkeit) simuliert. Dabei wurden Tropfen (ca. 0,25 ml) der Reagenzien auf im Zweischichtaufbau (Klarlack über metallic Basislack) beschichtete Bleche im Abstand von ca. 2 cm aufgebracht und im Temperaturgradientenofen (BYK-Gardner) 30 min einem linearen Temperaturgradienten von 35 - 80 °C unterzogen. Anschließend wurden die Bleche mit Wasser abgewaschen und nach 24 h beurteilt. Für die Beurteilung der Säurebeständigkeit wurden die Bereiche eines ersten erkennbaren Angriffs des Klarlacks sowie die einer schweren Zerstörung inclusiv Angriff des Basecoats herangezogen. Als Maß für die Pancreatinbeständigkeit wurde die Temperatur angegeben, bei der sichtbare Markierungen im Klarlack zu erkennen waren. Die Beständigkeit gegen mechanische Beanspruchungen wurde in einem Kratztest an Zweischichtlackierungen auf phosphatierten Stahlblechen (Bonder 26) untersucht: Die beschichteten Bleche werden in eine den Abmessungen des Bleches angepaßte Wanne waagerecht gelegt, mit 100 ml einer 0,1%-igen Aufschlämmung eines Kratzmediums (Leneta Standardized Scrab Medium, Fa. Leneta Co, Ho-Ho-Kus, N.J., USA) überdeckt. Ein Wattebausch, Fläche ca. 1,5 cm², wird dann mit einem Auflagegewicht von ca. 1kg auf dem Blech über die gesamte Länge in Doppelhüben geführt. Nach 150 Doppelhüben wird das Blech entnommen, mit Wasser abgewaschen, bei Umgebungstemperatur getrocknet. Nach 24 h wird an verschiedenen Punkten des Prüfbereichs der Glanz der Beschichtung im 20° und 60 °-Winkel gemessen. Herangezogen werden die gemittelten Werte. Der Glanzverlust als Maß für die Kratzbeständigkeit einer Beschichtung, wird als Differenz zum Ausgangswert (Glanzwert vor der Prüfung) ausgedrückt.

**Tabelle 3**

| Beständigkeiten der Klarlacke gegen simulierte Umwelteinflüsse und mechanische Beanspruchung | | | | |
|---|---|---|---|---|
| | Beispiel 2 | Beispiel 3 | Beispiel 4 (Vergleich) | Beispiel 5 (Vergleich) |
| Säurebeständigkeit, erster Angriff bei [°C] | 72 | 72 | 66 | 69 |
| Säurebeständigkeit, starker Angriff bei [°C] | 74 | 75 | 74 | 73 |
| Pancreatinbeständigkeit bis [°C] | >80 | >80 | 61 | 74 |
| | | | | |
| Kratzbeständigkeit, Δ Glanz 60° | 8 | 9 | 6 | 8 |
| Kratzbeständigkeit, Δ Glanz 20° | 12 | 20 | 12 | 21 |

Die Ergebnisse zeigen, daß bei vergleichbarem Verhältnis von aliphatischem / cycloaliphatischem Polyisocyanat vergleichbare Beständigkeiten gegen mechan. Beanspruchungen (Kratztest) bei Verwendung von MPDI- oder HDI-Polyisocyanaten als aliphatischer Polyisocyanatkomponente resultieren. Jedoch führt die Verwendung von Polyiscyanatkomponenten auf Basis von MPDI- und IPDI-Polyisocyanat (Beispiele 2 und 3) zu signifikant verbesserten Beständigkeiten gegen Umwelteinflüsse.

## Patentansprüche

1. 2K-PUR-Beschichtungszusammensetzung im wesentlichen enthaltend:
A) eine Polyolkomponente,
B) eine Polyisocyanatkomponente,
dadurch gekennzeichnet,
daß die Polyisocyanatkomponente B) mindestens 30 Gew.-% eines Polyisocyanats auf Basis von 2-Methylpentandiisocyanat-1,5 und ein Polyisocyanat auf Basis von Isophorondiisocyanat enhält, wobei die Summe beider Polyisocyanate 100 Gew.-% ergibt.

2. 2K-PUR-Beschichtungszusammensetzungen gemäß Anspruch 1,
dadurch gekennzeichnet,
daß als Polyisocyanate auf Basis von MPDI biuret-, uretdion- und/oder isocyanuratgruppenhaltige Polyisocyanate, auch in allophanatmodifizierter Form, mit einer mittleren Funktionalität von 2,3 - 5 enthalten sind.

3. 2K-PUR-Beschichtungszusammensetzung nach mindestens einem der Ansprüche 1 - 2,
dadurch gekennzeichnet,
daß als Polyisocyanate auf Basis von IPDI isocyanuratgruppenhaltige Polyisocyanate, auch in allophanatmodifizierter Form, mit einer mittleren Funktionalität von 2,3 - 4 enthalten sind.

4. 2K-PUR-Beschichtungszusammensetzungen nach mindestens einem der Ansprüche 1 - 3,
dadurch gekennzeichnet,
daß isocyanuratgruppenhaltige Polyisocyanate enthalten sind.

5. 2K-PUR-Beschichtungszusammensetzungen nach mindestens einem der Ansprüche 1 - 4,
dadurch gekennzeichnet,
daß Polyisocyanate mit einem Restmonomergehalt < 0,5 Gew.-% enthalten sind.

6. 2K-PUR-Beschichtungszusammensetzungen nach mindestens einem der Ansprüche 1 - 5,
dadurch gekennzeichnet,
daß isocyanuratbasierende Polyisocyanate, erhalten durch katalytische Trimerisierung von Diisocyanatgemischen von MPDI und IPDI, enthalten sind.

7. 2K-PUR-Beschichtungszusammensetzungen nach mindestens einem der Ansprüche 1 - 6,
dadurch gekennzeichnet,
daß als Polyolkomponente A) hydroxylgruppenhaltige (Meth)acryl-Copolymerisate allein oder in Kombination mit hydroxylgruppenhaltigen, gesättigten Polyesterharzen und/oder urethan- und estergruppenhaltigen Polyolen, enthalten sind.

8. 2K-PUR-Beschichtungszusammnesetzungen nach mindestens einem der Ansprüche 1 - 7,
dadurch gekennzeichnet,
daß das Vernetzungsverhältnis der Komponenten A) und B), ausgedrückt als stöchiometrisches Verhältnis OH:NCO, 1:0,8 bis 1:1,5 beträgt.

9. 2K-PUR-Beschichtungszusammensetzungen nach mindestens einem der Ansprüche 1 - 8,
dadurch gekennzeichnet,
daß Lösemittel und Hilfsmittel enthalten sind.
